# EUROPEAN PATENT SPECIFICATION

(11) **EP 4 215 727 B1**
(45) Date of publication and mention of the grant of the patent: **08.10.2025**
(21) Application number: 23151810.1
(22) Date of filing: 16.01.2023
(51) Int. Cl.: F01N 3/20, F01N 3/36, F01N 13/00, B01D 53/94, B01J 29/072, B01J 29/076, F01N 9/00

(54) **AN EXHAUST GAS AFTERTREATMENT DEVICE AND A PROPULSION SYSTEM INCLUDING THE DEVICE**
ABGASNACHBEHANDLUNGSVORRICHTUNG UND ANTRIEBSSYSTEM MIT DER VORRICHTUNG
DISPOSITIF DE POST-TRAITEMENT DE GAZ D'ÉCHAPPEMENT ET SYSTÈME DE PROPULSION COMPRENANT LE DISPOSITIF

(30) Priority: 20.01.2022 IT 202200000941
(43) Date of publication of application: 26.07.2023
(73) Proprietor: FPT Motorenforschung AG, 9320 Arbon (CH)
(72) Inventor: TSINOGLOU, Dimitrios, 9320 Arbon (CH); PIDRIA, Marco Federico, 9320 Arbon (CH); KOIRALA, Rajesh, 9320 Arbon (CH); MERLONE BORLA, Edoardo, 9320 Arbon (CH); WACHTER, Ralph, 9320 Arbon (CH)
(74) Representative: Fiume, Orazio

(56) References cited:
- EP-A1- 3 180 106
- WO-A1-2015/161960
- WO-A1-2017/180114
- JP-A- 2017 227 181

## Description

### Field of the invention

The present invention relates to the field of exhaust gas after-treatment systems and in particular to the field of Diesel cycle engines.

### State of the art

Diesel cycle engines are generally equipped with an exhaust gas after-treatment system (ATS) which includes in succession
- a Diesel Oxidation catalyst,
- a DPF (Diesel Particulate Filter) ed
- a selective reduction catalyst SCR (Selective Catalytic Reduction) designed to reduce nitrogen oxides (NOx) by injecting, upstream of the catalyst itself, a urea based reducing agent in order to produce ammonia (NH3) useful for NOx conversion.

Often a so called "Clean Up catalyst" is arranged immediately downstream of the SCR in order to neutralize an excess of ammonia produced in the SCR to neutralize NOx.

The most known and implemented SCR catalysts are CU-zeolite and Fe-zeolite catalysts. The latter displays an improved stability but a high-temperature selectivity.

According to the present description, with "high-temperature" a temperature exceeding 400-450°C is meant. Several kinds of SCR are known.

Future emission regulations in Europe and elsewhere are expected to include threshold limits for pollutants that were not regulated so far. Among those pollutants is Nitrous Oxide (N2O), which is expected to be regulated due to its very strong Global Warming Potential (GWP), which is 265-298 times higher than that of CO2. N2O is already a regulated pollutant in the United States. N2O is a pollutant that is mainly produced by the Selective Catalytic Reaction (SCR) catalysts, as a by-product of NOx reduction by NH3. In the current state of the art, the ATS is a producer of N2O, and the N2O production is proportional to the amount of converted NOx.

It is also known an SCR catalyst of titania-vanadia (TiV) technology, which is used to convert the NOx in the exhaust stream into N2, similarly and alternative to current commercial implementations based on CU or FE-zeolite catalysts. A TiV SCR catalyst has typically a very low N2O selectivity, in the temperature range 200-400°C, under most common exhaust gas composition conditions. In this temperature range, this technology is best-in-class with respect to low N2O production, which makes it an attractive candidate for future emission regulations. However, N2O production increases significantly above 450°C, which may lead to exceeding future emission thresholds. In particular, this SCR produces N2O proportionally to the amount of NOx it converts and the proportionality factor, defined as the molar ratio of N2O produced divided by NOx converted, ranges between 0.5% and 20% for most common technologies and operating conditions.

WO2017180114 discloses an exhaust system for a diesel engine comprises: an oxidation device for CO and/or HC, comprising a platinum group metal (PGM) and a substrate, wherein the PGM is selected from platinum (Pt), palladium (Pd) and a combination thereof; an injector for introducing an ammonia precursor into the exhaust gas, which is downstream of the emissions control device: a first selective catalytic reduction (SCR) catalyst downstream of the injector for introducing an ammonia precursor into the exhaust gas, wherein the first SCR catalyst comprises a substrate and a first SCR composition, wherein the substrate is either a flow-through substrate or a filtering substrate; a second SCR catalyst downstream of the first selective catalytic reduction catalyst, wherein the second SCR catalyst comprises a flow-through substrate and a second SCR composition; and wherein at least one of the emissions control device and the first SCR catalyst has a filtering substrate.

If not specifically excluded in the detailed description that follows, what is described in this chapter is to be considered as an integral part of the detailed description.

### Summary of the invention

Scope of the present invention is to present a ATS specifically designed for Diesel engines and capable to sensibly reduce the N2O production at high temperature.

The basic idea of the present idea is to implement a first SCR catalyst of titania-vanadia provided of its urea based reducing agent doser arranged immediately upstream of the first SCR and to implement a second iron-zeolite (Fe-zeolite) SCR arranged immediately downstream of the first SCR.

Usually, an SCR provided of a reducing agent doser is named as "active". According to the present invention, only the first SCR is active, while the second SCR is passive.

The second SCR of FE-zeolite is capable to convert N2O species over a predetermined temperature threshold.

Advantageously, the second FE-zeolite SCR is capable to passively neutralize N2O in the same temperature range, where the first titania-vanadia SCR displays a high selectivity.

In other words, the second SCR behaves complimentary with the first SCR.

The main advantage of this invention is that it enables the engine to be calibrated so that it produces higher values of engine-out NOx emissions, while still complying with both NOx and N2O emission limits.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
- Figure 1 shows a diagram of a Fe-Zeolite SCR N2O percentage conversion to N2 over temperature, with a Gas composition at inlet of the Fe-Zeolite SCR of: 30 ppm N2O, 100ppm NO, 10%02, 5%H2O, and NH3/NOx ratio according to the graph legend;
- Figure 2 discloses a diagram of a titania-vanadia SCR N2O percentage production over the temperature for different NO2/NOx ratios for two different SCR catalyst technologies based on TiV, indicated in the legend as "TiV-1" and TiV-2";

- Figure 3 discloses schematically a portion of the ATS according to a first embodiment;
- Figure 4 discloses schematically a portion of the ATS of a second embodiment, according to the present invention;
- Figures 5a and 5b show two diagrams for two corresponding different temperature values, where the N2O conversion is disclosed over the time scale in connection with an HC injection in the ATS such as to reach the second SCR;
- Figure 6 discloses one example of flow diagram of a preferred embodiment of the method of the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each.

### Detailed description of exemplary embodiments

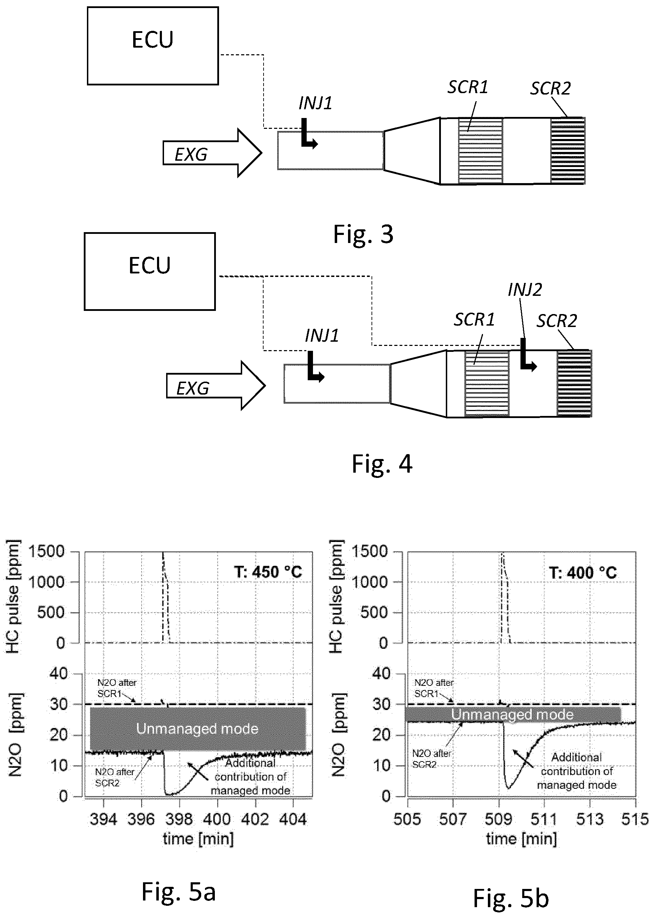

Figure 3 shows a first embodiment of a portion of an ATS.

According to the present invention, the NOx conversion is realized through a tandem of two SCRs, where the first one SCR1, is active and of the titania-vanadia type, and the second one, SCR2, is of the iron-zeolite type.

A urea based doser INJ1 is arranged immediately upstream of the SCR tandem.

No urea based doser is arranged in between the two SCRs.

Preferably, the ATS includes in succession a DOC (not disclosed), a DPF (not disclosed) and the tandem of the above SCRs. Here, the succession relates to the gas flow circulation, indicated through the big arrow in the figures 3 and 4.

Optionally, the ATS can include a CUC catalyst, not disclosed, arranged as last device of the ATS to convert an excess of ammonia at the tandem outlet.

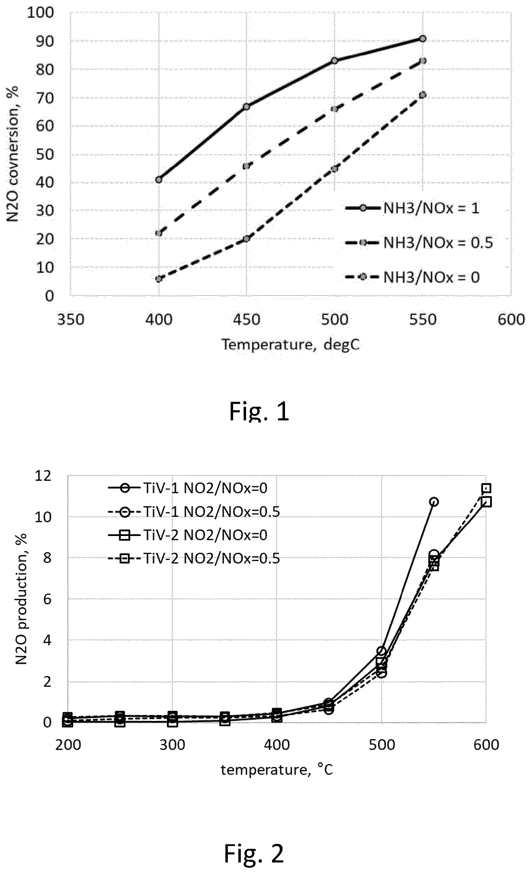

Figure 1 discloses the capability of the second SCR to convert N2O over the temperature for different NH3/NOx ratios. It is clear that, being the second SCR passive, namely, not provided of a corresponding reducing agent doser, the ratios NH3/NOx > 0 are achieved for NH3 slippage from the first SCR.

Figure 1 clarifies that the second SCR is capable to convert N2O starting from a temperature of 400°C and this capability reaches 40% at 500°C.

Furthermore, its capability increases relevantly when NH3 and NOx reaches according to the ratios 0.5 and 1.

This means that if the first SCR is not capable to convert the entire NOx produced by the engine, the dosing of NH3 is managed such as to slip in the second SCR in the same ratio with the unconverted NOx: this is beneficial for the complete conversion of the NOx and almost complete conversion of N2O.

According to a second preferred embodiment of the invention, named as "managed", the exhaust flow is enriched with carbon monoxide (CO) or, as according to the subject-matter of claim 1, hydrocarbons (HC) at least according to a cyclic injection scheme. This embodiment, named "managed" is different from the previous one where no CO or HC are introduced in the exhaust flow and for this reason, the previous embodiment is named as "unmanaged". Figures 5a and 5b disclose two diagrams plotted for two different operating temperatures, respectively 450°C and 400°C.

As long as the second SCR (SCR2) is unmanaged, namely no CO or HC is introduced upstream of the second SCR, the N2O percentage surviving after the second SCR is around 85% at 400°C and around 50% at 450°C.

The introduction of HC as a spike at about the time instant 397 causes a sudden reduction of the N2O percentage surviving after the second SCR. The surviving percentage is about 5% at 400°C and about 0% at 450°C.

Therefore, the HC injection is effective also at low temperature.

According to a preferred embodiment of the invention, the HC is introduced as pulses, namely for relatively short time intervals, during the ATS operation.

The introduced reducing species reduce the incoming N2O almost completely during the pulse, even at operating temperatures lower than 400-450°C.

The introduced reducing species reduce the catalytic material of the second SCR. After an injection pulse has ended, part of the incoming N2O is consumed to re-oxidize the catalytic material, thus providing an N2O reduction effect that lasts beyond the duration of the pulse of reducing species. This is the reason for which a constant introduction of the HC is not required even if possible. The introduction of HC can be operated in two different ways: a) through post-injection, which is defined as injection of fuel from the engine's fuel injection system, in a manner that does not allow this fuel to combust in the engine, or b) or through a dedicated second injector INJ2 as disclosed in figure 4. The second injector can be arranged in any place along with the ATS upstream of the second SCR, however, it is preferable to arrange it immediately upstream the DOC or immediately upstream of the DPF, considering the classical sequence DOC+DPF+SCR.

In order to avoid any confusion between the two ways to introduce HC in the ATS, the injector INJ2 is arranged "at the ATS", in order to avoid any confusion with the fuel injectors associated with the internal combustion engine. In the same way we can affirm that the second injector is arranged downstream of the exhaust manifold of the engine, indeed the large arrows in the figure 3 and 4 represent the exhaust gas EXG produced by the internal combustion engine. In case the engine is provided of a turbocharger, the first and second injector are clearly arranged downstream the turbine of the turbocharger.

While the urea based reducing agent is arranged immediately upstream of the first SCR, the second injector could be arranged both immediately upstream or immediately downstream of the first SCR, but clearly upstream of the second SCR in order to achieve the abatement of N2O at the second SCR.

Both said methods of HC injection can be used not only to enhance the N2O conversion, but also to force DPF regenerations.

If the second injector is located upstream of a DOC or DPF, in order to enable the HC pulses to reach the second SCR, without being oxidised in the DOC or DPF, HC pulses are synchronized with a condition of low oxygen in the exhaust gas, such as during an engine acceleration or in general when the air/fuel ratio is circa stoichiometric.

It is not easy to produce post-injections during low oxygen conditions in the exhaust gas, thus the injector at the ATS is the best solution to achieve the present result.

As a consequence, the arrangement of the second injector between the two SCRs avoid the implementation of any kind of injection synchronization. This latter configuration is the subject of the present invention.

The second injector is arranged downstream of the first SCR, as disclosed in figure 4. In this case it is only implemented for N2O conversion.

According to a preferred control strategy, the HC is introduced through post-injections and/or through a fuel injector INJ2 as long as the first SCR temperature is in the temperature range of [250 - 450]°C.

When the SCR1 temperature is in this range, the frequency of HC pulses, and the amount of HC introduced in each pulse are calculated by a computer algorithm that is executed in an on-board Electronic Control Unit. This algorithm preferably takes into account: the measured or calculated SCR1 temperature, the measured or calculated NOx concentration in the exhaust stream, the exhaust gas flow, and the measured or calculated oxygen content in the exhaust gas.

When the temperature at the first SCR exceeds such range, the HC introduction can be inhibited in view of the intrinsic efficiency of the second SCR in the N2O conversion.

According to another preferred control strategy that can be combined with the previous one, when the first SCR temperature exceed a predetermined threshold, for example 500°C or higher, the first doser INJ1 is controlled to saturate the first SCR and to at least partially fill the second SCR.

In other words, the reducing agent injection is managed
- To neutralize NOx,
- To neutralize N2O.

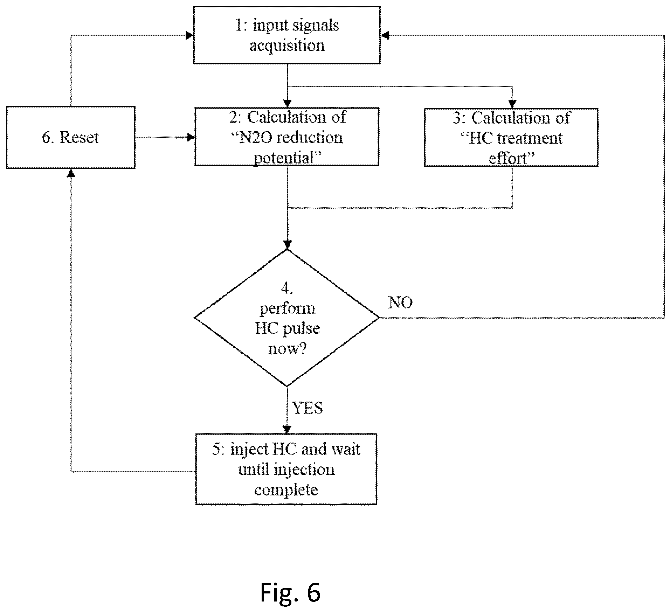

Figure 6 discloses one example of flow diagram according to the present invention.

According to the present invention the method depicted through figure 6 includes the following steps that are executed iteratively during engine operation:
- (Step 1) acquisition of input signals by means of measurement or calculation representative of:
   ∘ Temperature value at second SCR
   ∘ NOx concentration in the engine-out exhaust flow
   ∘ Exhaust gas mass flow
   ∘ Engine torque
   ∘ Amount of fuel injected in the combustion chamber
   ∘ Oxygen content in the exhaust gas
- (Step 2) using said input signals (from step 1) for calculating the "N2O reduction potential", defined as the capability of the second SCR to reduce N2O at current conditions,
- (Step 3) using the input signals from (step 1), calculation of "HC treatment effort", defined as the quantity of hydrocarbons required to fully re-instate the N2O reduction potential of second SCR to its maximum capability, when a hydrocarbon pulse is introduced in the current conditions;
- (Step 4) based on the calculations of step 2 and step 3, decision if a hydrocarbon pulse is needed, or if such hydrocarbon pulse can be postponed;
if (step 4 = yes) it is decided to introduce a HC pulse,
- (Step 5) start injection pulses to introduce HC quantity calculated (in step 3) and wait until said amount has been injected completely, then
- (Step 6) reset of the previous acquisitions and calculations is carried out and return to the start (Step 1) ;
- otherwise, if (step 4 = no) it is decided to postpone the introduction of a HC pulse, the iteration loop returns to the start (step 1) directly.

It is important to note that steps 2 and 3 can be executed in any order or even in parallel as depicted in figure 6. The present invention can be advantageously carried out by means of a computer program, which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer.

From the above description, the person skilled in the art is able to realize the object of the invention without introducing further construction details.

## Claims

1. An exhaust gas after-treatment system for a Diesel engine including a first Selective Reduction Catalyst SCR (SCR1) of the titania-vanadia type coupled with a second SCR (SCR2) of the iron-zeolite type arranged immediately downstream of the first SCR according to a gas stream circulation and wherein one urea based reducing agent doser (INJ1) is arranged immediately upstream of the first SCR, according to said gas stream circulation, the system comprises control means (ECU) configured to monitor and to control the system, the system is
**characterized in that** an hydrocarbons injection means (INJ2) is arranged at the after-treatment system, between the first (SCR1) and second SCR (SCR2).

2. An exhaust gas after-treatment system according to claim 1, including in succession, according to a an exhaust gas flow circulation,
- a Diesel Oxidation catalyst (DOC),
- a Diesel Particulate Filter (DPF),
- said first doser (INJ1) for a urea based reducing agent,
- said first Selective Reduction Catalyst (SCR1) of the titania-vanadia type,
- said second SCR (SCR2) of the iron-zeolite type, and optionally
- a Clean Up catalyst (CUC) for neutralize an ammonia excess.

3. System according to claims 1 or 2, the control means (ECU) is arranged to control said first doser (INJ1) in such a way to fill only said first SCR with ammonia obtained from a hydrolysis of said urea based agent or to saturate said first SCR (SCR1) with ammonia and to at least partially fill said second SCR (SCR2).

4. System according to claim 3, wherein said control means are arranged to control said hydrocarbon injection means (INJ2) such that an amount of hydrocarbon introduced is function of a temperature value measured at the second SCR.

5. System according to any one of the claims 3 or 4, wherein said control means are arranged to control said hydrocarbon injection means (INJ2) in such a way to enable the introduction of hydrocarbons when said first SCR (SCR1) is in a temperature range of 250 - 450°C.

6. System according to claim 5, wherein said control means are arranged to control an amount of said hydrocarbons introduction as a function of a temperature of said second SCR (SCR2).

7. System according to any one of the claims 1 - 6, wherein said hydrocarbons injection means (INJ2) are configured to introduce hydrocarbons in the ATS when an oxygen content in the exhaust gas is below a predetermined threshold, such as during an acceleration, when the hydrocarbons injection means are arranged upstream of said Diesel Oxidation catalyst (DOC), or upstream of said Diesel Particulate Filter (DPF).

8. System according to any one of the claims 6 - 7, wherein said hydrocarbons injection means are arranged to introduce HC in the ATS according to a sequence of pulses, wherein said control means are configured to calculate a frequency of said pulses and an amount of HC per pulse as a function of said second SCR temperature.

9. A Vehicular propulsion system comprising a Diesel engine and an exhaust gas after-treatment system according to any one of the claims 1 - 8, wherein the after-treatment system is arranged to treat the exhaust gas produced by the Diesel engine.

10. Propulsion system according to claim 9, wherein said control means (ECU) are further configured to control the Diesel engine operation and wherein the control means are arranged to command fuel post-injections when the second SCR temperature is below a predetermined threshold with an amount of fuel injected function of the temperature of said second SCR (SCR2).

11. A computer-implemented method to control an exhaust gas after-treatment system according to claim 1 or 2 comprising the following steps:
- Step 1: acquisition of input signals by means of measurement or calculation representative of:
∘ Temperature value at second SCR (SCR2)
∘ NOx concentration in the engine-out exhaust flow
∘ Exhaust gas mass flow
∘ Engine torque
∘ Amount of fuel injected in the combustion chamber
∘ Oxygen content in the exhaust gas
- Step 2: using the input signals from Step 1 for calculating the "N2O reduction potential", defined as the capability of the second SCR (SCR2) to reduce N2O at current conditions,
- Step 3: using the input signals from Step 1, calculation of "HC treatment effort", defined as the quantity of hydrocarbons required to fully re-instate the N2O reduction potential of second SCR (SCR2) to its maximum capability, when a hydrocarbon pulse is introduced in the current conditions;
- Step 4: based on the calculations of Step 2 and Step 3, decision if a hydrocarbon pulse is needed, or if such hydrocarbon pulse can be postponed;
if Step 4 = yes: it is decided to introduce a HC pulse, then
- Step 5: start injection pulses to introduce HC quantity calculated at Step 3 and wait until said amount has been injected completely, then
- Step 6: reset of the previous acquisitions and calculations is carried out and return to the start (Step 1) ;
- otherwise, if Step 4 = no, it is decided to postpone the introduction of a HC pulse, the iteration loop returns to the start (step 1) directly.

## Patentansprüche

1. Abgasnachbehandlungssystem für einen Dieselmotor, bestehend aus einem ersten selektiven Reduktionskatalysator SCR (SCR1) vom Titan-Vanadium-Typ, der mit einem zweiten ferro-zeolithischen Katalysator SCR (SCR2) gekoppelt ist, der unmittelbar stromabwärts des ersten SCR angeordnet ist, entsprechend einer Gasstromzirkulation, und wobei ein harnstoffbasierter Reduktionsmitteldosierer (INJ1) ist unmittelbar stromaufwärts des ersten SCR angeordnet, entsprechend der Gasstromzirkulation, wobei das System Steuermittel (ECU) umfasst, die zur Überwachung und Steuerung des Systems konfiguriert sind, wobei das System ist **dadurch gekennzeichnet, dass** zwischen dem ersten (SCR1) und dem zweiten SCR (SCR2) am Nachbehandlungssystem Kohlenwasserstoff-Einspritzmittel (INJ2) angeordnet sind.

2. Abgasnachbehandlungssystem nach Anspruch 1, das nacheinander entsprechend einer Abgasstromzirkulation Folgendes umfasst:
- einen Dieseloxidationskatalysator (DOC),
- einen Dieselpartikelfilter (DPF),
- die erste Dosiereinheit (INJ1) für ein harnstoffbasiertes Reduktionsmittel,
- den ersten selektiven Reduktionskatalysator (SCR1) vom Titan-Vanadium-Typ,
- den zweiten SCR (SCR2) vom ferro-zeolithischen Typ und optional
- einen Reinigungskatalysator (CUC) zur Neutralisierung von überschüssigem Ammoniak.

3. System nach Anspruch 1 oder 2, wobei die Steuermittel (ECU) den ersten Dosierer (INJ1) so steuern, dass entweder nur der erste SCR mit Ammoniak gefüllt wird, das durch Hydrolyse des harnstoffbasierten Reduktionsmittels gewonnen wird, oder den ersten SCR (SCR1) mit Ammoniak sättigt und den zweiten SCR (SCR2) zumindest teilweise füllt.

4. System nach Anspruch 3, wobei die Steuermittel so angeordnet sind, dass sie die Kohlenwasserstoff-Einspritzmittel (INJ2) so steuern, dass eine Menge der eingeleiteten Kohlenwasserstoffe von einem am zweiten SCR gemessenen Temperaturwert abhängt.

5. System nach einem der Ansprüche 3 oder 4, wobei die Steuermittel die Kohlenwasserstoff-Einspritzmittel (INJ2) so steuern, dass sie die Einspeisung von Kohlenwasserstoffen ermöglichen, wenn sich der erste SCR (SCR1) in einem Temperaturbereich zwischen 250 und 450°C befindet.

6. System nach Anspruch 5, wobei die Steuermittel so angeordnet sind, um eine Menge der eingespritzten Kohlenwasserstoffe in Abhängigkeit von der Temperatur des zweiten SCR (SCR2) zu steuern.

7. System nach einem der Ansprüche 1 bis 6, wobei die Kohlenwasserstoffeinspritzmittel (INJ2) so konfiguriert sind, dass sie Kohlenwasserstoffe in den ATS einspeisen, wenn ein Sauerstoffgehalt im Abgas unter einem vorgegebenen Grenzwert liegt, beispielsweise während einer Beschleunigung, wenn die Kohlenwasserstoffeinspritzmittel stromaufwärts des Dieseloxidationskatalysators oder stromaufwärts des Dieselpartikelfilters (DPF) angeordnet sind.

8. System nach einem der Ansprüche 6 bis 7, wobei die Kohlenwasserstoffeinspritzmittel so konfiguriert sind, dass sie HC gemäß einer Impulsfolge in den ATS einspeisen, wobei die Steuermittel so konfiguriert sind, dass sie eine Frequenz der Impulse und die HC-Menge pro Impuls in Abhängigkeit von der Temperatur des zweiten SCR berechnen.

9. Fahrzeugantriebssystem, umfassend einen Dieselmotor und ein Abgasnachbehandlungssystem nach einem der Ansprüche 1 bis 8, wobei das Nachbehandlungssystem so angeordnet ist, dass es die vom Dieselmotor erzeugten Abgase behandelt.

10. Antriebssystem nach Anspruch 9, wobei die Steuermittel (ECU) weiter so konfiguriert sind, dass sie den Betrieb des Dieselmotors steuern und wobei die Steuermittel so angeordnet sind, dass sie die Kraftstoffnacheinspritzungen steuern, wenn die zweite SCR-Temperatur unterhalb eines vorbestimmten Grenzwerts mit einer Menge vom eingespritzten Kraftstoffs in Abhängigkeit von der Temperatur des zweiten SCR (SCR2), liegt.

11. Verfahren zur computergestützten Steuerung eines Abgasnachbehandlungssystems gemäß Anspruch 1 oder 2, umfassend die folgenden Schritte:
- (Schritt 1) Erfassung von Eingangssignalen durch Messung oder Berechnung, die repräsentativ sind für:
∘ den Temperaturwert am zweiten SCR;
∘ die NOx-Konzentration im Abgasstrom des abgestellten Motors;
∘ den Abgasmassenstrom;
∘ das Motordrehmoment;
∘ die in den Brennraum eingespritzte Kraftstoffmenge;
∘ den Sauerstoffgehalt im Abgas;
- (Schritt 2) Berechnung des "N2O-Reduktionspotenzials" anhand der Eingangssignale (Schritt 1), definiert als die Fähigkeit des zweiten SCR (SCR2), N2O unter den gegebenen Bedingungen zu reduzieren;
- (Schritt 3) Berechnung des "HC-Behandlungsaufwands" anhand der Eingangssignale aus Schritt 1, definiert als die Menge an Kohlenwasserstoffen, die erforderlich ist, um das N2O-Reduktionspotenzial des zweiten SCR (SCR2) unter den gegebenen Bedingungen vollständig auf seine maximale Kapazität wiederherzustellen, wenn unter den gegebenen Bedingungen ein Kohlenwasserstoffimpuls eingeleitet wird;
- (Schritt 4) Basierend auf den Berechnungen aus Schritt 2 und Schritt 3, ermitteln, ob ein Kohlenwasserstoffimpuls erforderlich ist oder ob dieser aufgeschoben werden kann. Falls (Schritt 4 = ja) wird die Einleitung eines HC-Impulses beschlossen
- (Schritt 5) die Einspritzimpulse starten, um die in Schritt 3 berechnete HC-Menge einzubringen und zu warten, bis diese Menge vollständig eingespritzt ist. Anschließend
- (Schritt 6) - die vorherigen Messungen und Berechnungen werden wiederhergestellt und zum Ausgangspunkt (Schritt 1) zurückgekehrt wird.
- Falls hingegen Schritt 4 = nein, wird die Einleitung eines HC-Impulses aufgeschoben und der Iterationskreislauf wird direkt zum Ausgangspunkt (Schritt 1) zurückgeführt.

## Revendications

1. Système de post-traitement des gaz d'échappement pour moteur diesel, comprenant un premier catalyseur de réduction sélective SCR (SCR1) du type titane-vanadium couplé à un deuxième (SCR2) du type ferro-zéolithique disposé immédiatement en aval du premier SCR, selon une circulation d'un flux des gaz, dans lequel un doseur d'agent réducteur à base d'urée (INJ1) est disposé immédiatement en amont du premier SCR, selon ladite circulation du flux des gaz, le système comprenant des moyens de commande (ECU) configurés pour contrôler et commander le système, ledit système étant **caractérisé en ce qu'**un moyen d'injection d'hydrocarbures (INJ2) est disposé sur le système de post-traitement, entre le premier (SCR1) et le deuxième SCR (SCR2).

2. Système de post-traitement des gaz d'échappement selon la revendication 1, comprenant successivement, selon une circulation du flux des gaz d'échappement :
- un catalyseur d'oxydation diesel (DOC),
- un filtre à particules diesel (DPF),
- ledit premier doseur (INJ1) pour un agent réducteur à base d'urée,
- ledit premier catalyseur de réduction sélective (SCR1) du type au titane-vanadium,
- ledit deuxième SCR (SCR2) du type ferro-zéolithique, et éventuellement
- un catalyseur de nettoyage (CUC) pour neutraliser un excès d'ammoniac.

3. Système selon les revendications 1 ou 2, le moyen de commande (ECU) étant agencé pour commander ledit premier doseur (INJ1) de sorte que seulement ledit premier SCR est rempli avec ammoniac obtenu a partir d'une hydrolyse dudit agent à base d'urée ou pour saturer ledit premier SCR (SCR1) avec ammoniac et pour remplir au moins partiellement ledit deuxième SCR (SCR2).

4. Système selon la revendication 3, dans lequel lesdits moyens de commande sont agencés pour commander lesdits moyens d'injection d'hydrocarbures (INJ2) de sorte que une quantité d'hydrocarbures introduite soit fonction d'une valeur de température mesurée au niveau du deuxième SCR.

5. Système selon l'une quelconque des revendications 3 ou 4, dans lequel lesdits moyens de commande sont agencés pour commander lesdits moyens d'injection d'hydrocarbures (INJ2) de sorte qu'ils permettent l'introduction d'hydrocarbures lorsque ledit premier SCR (SCR1) se trouve dans une plage de température comprise entre 250 et 450 °C.

6. Système selon la revendication 5, dans lequel lesdits moyens de commande sont agencés pour commander une quantité desdits hydrocarbures injectée en fonction d'une température dudit deuxième SCR (SCR2).

7. Système selon l'une quelconque des revendications 1 à 6, dans lequel lesdits moyens d'injection d'hydrocarbures (INJ2) sont configurés pour introduire des hydrocarbures dans l'(ATS)) lorsque un contenu d'oxygène dans les gaz d'échappement est au dessous d'une limite prédéterminée comme pendant une accélération, lorsque les moyens d'injection d'hydrocarbures sont disposés en amont dudit catalyseur d'oxydation diesel ou en amont dudit filtre de particules diesel (DPF).

8. Système selon l'une quelconque des revendications 6 à 7, dans lequel lesdits moyens d'injection d'hydrocarbures sont configurés pour introduire des HC dans l'ATS selon une séquence d'impulsions, dans lequel lesdits moyens de commande sont configurés pour calculer une fréquence desdites impulsions et une quantité des HC pour chaque impulsion, en fonction de ladite deuxième température SCR.

9. Système de propulsion de véhicule comprenant un moteur diesel et un système de post-traitement des gaz d'échappement selon l'une quelconque des revendications 1 à 8, le système de post-traitement étant agencé pour traiter les gaz d'échappement produits par le moteur diesel.

10. Système de propulsion selon la revendication 9, dans lequel lesdits moyens de commande (ECU) sont en outre configurés pour commander le fonctionnement du moteur diesel et dans lequel les moyens de commande sont agencés pour commander les post-injections de carburant lorsque la température du deuxième SCR est inférieure à un seuil prédéterminé, la quantité de carburant injectée étant fonction de la température dudit deuxième SCR2.

11. Procédé de commande d'un système de post-traitement des gaz d'échappement par ordinateur selon la revendication 1 ou 2, comprenant les étapes suivantes :
- (Étape 1) Acquisition de signaux d'entrée, par mesure ou calcul, représentatifs de :
∘ la valeur de température au niveau du deuxième SCR ;
∘ la concentration en NOx dans le flux d'échappement du moteur arrêté ;
∘ le débit massique des gaz d'échappement ;
∘ le couple moteur ;
∘ la quantité de carburant injectée dans la chambre de combustion ;
o la teneur en oxygène des gaz d'échappement ;
- (Étape 2) Utilisation desdits signaux d'entrée (Étape 1) pour calculer le « potentiel de réduction du N2O », défini comme la capacité du deuxième SCR (SCR2) à réduire le N2O dans les conditions actuelles ;
- (Étape 3) Utilisation des signaux d'entrée (de l'Étape 1) pour calculer l'« effort de traitement des HC », défini comme la quantité d'hydrocarbures nécessaire pour rétablir complètement le potentiel de réduction du N2O du deuxième SCR (SCR2) à sa capacité maximale, lorsqu'une impulsion d'hydrocarbures est introduite dans les conditions actuelles ;
- (Étape 4) Sur la base des calculs de l'Etapes 2 et de l'Etape 3, déterminer si une impulsion d'hydrocarbures est nécessaire ou si une telle impulsion d'hydrocarbures peut être différée ; si (étape 4=oui) on décidez d'introduire une impulsion HC,
- (Etape 5) démarrez les impulsions d'injection pour introduire la quantité de HC calculée dans l'Etape 3 et attendre jusqu'au moment dans lequel ladite quantité a été complètement injectée, donc
- (Etape 6 : rétablir les acquisitions et les calculs précédents, en retournant au départ (Etape 1)
- au contraire, si l'Etape 4=no on décide de différer l'introduction d'une impulsion de HC, le circuit d'itération tournant directement au départ (Etape 1).
